# EUROPEAN PATENT SPECIFICATION

(11) **EP 2 285 047 B1**
(45) Date of publication and mention of the grant of the patent: **03.10.2012**
(21) Application number: 09793805.4
(22) Date of filing: 10.04.2009
(51) Int. Cl.: H04L 12/24, H04L 29/06, G01S 1/00, H04W 24/00, H04L 29/08, G01S 19/05

(54) **METHOD AND NETWORK ELEMENT FOR TRACKING BASED ON TERMINAL CAPABILITY**
VERFAHREN UND NETZWERKELEMENT ZUR VERFOLGUNG BASIEREND AUF ENDGERÄTFUNKTIONALITÄT
PROCÉDÉ ET ÉLÉMENT DE RÉSEAU POUR SUIVI BASÉ SUR UNE CAPACITÉ DE TERMINAL

(30) Priority: 08.07.2008 CN 200810068363
(43) Date of publication of application: 16.02.2011
(73) Proprietor: Huawei Technologies Co., Ltd., Longgang District, Shenzhen Guangdong 518129 (CN)
(72) Inventor: LONG, Gang c/o Huawei Technologies Co. Ltd., Int,Prop.Dept., Shenzhen (CN)
(74) Representative: Isarpatent
(86) International application number: PCT/CN2009/071217
(87) International publication number: WO 2010/003330

(56) References cited:
- EP-A1- 1 443 791
- WO-A1-2007/083200
- CN-A- 1 750 667
- CN-A- 1 921 414
- CN-A- 1 965 238
- CN-A- 101 183 980
- CN-A- 101 330 656
- US-A1- 2006 293 066
- US-A1- 2007 037 597

## Description

### FIELD OF THE INVENTION

The present invention relates to communication technologies, and in particular, to a method and a Network Element (NE) for tracking based on User Equipment (UE) capabilities.

### BACKGROUND OF THE INVENTION

Tracking is a common method for performing daily monitoring and test in a communication system. For example, tracking is applied to various scenarios such as service verification, fault locating, equipment interconnection, and acceptance test. To make the tracking well targeted, certain tracking conditions are generally set before UEs are tracked, and the system tracks only the UEs compliant with the tracking conditions. Common tracking conditions include: tracking specified users, for example, tracking a user corresponding to a specified International Mobile Subscriber Identity (IMSI) or Mobile Station International ISDN Number (MSISDN); tracking specified UEs, for example, tracking a UE with a specified International Mobile Station Equipment Identity (IMEI); tracking a specified cell, for example, tracking all or part of the users in a specified cell; tracking a specified service type, for example, tracking the call service or the Short Message Service (SMS).

If the UEs with the specified functions are tracked, for example, if the UEs that support the Assisted Global Positioning System (A-GPS) function need to be tracked, the tracking method in the prior art is to find one or more UEs that support A-GPS as test UEs for tracking. At the time of tracking, the set tracking condition is generally the identity of the tracked UE (in the 3rd Generation Partnership Project (3GPP), the IMSI or IMEI is generally used as a tracking condition). A prerequisite of the method is: Before setting the tracking condition, it is necessary to know which UEs need to be tracked, and such UEs support the required function such as A-GPS. It is impossible to track the UEs whose model, function, or brand is unknown because such UEs do not meet the test requirements, for example, do not support the A-GPS function. Assuming an operator needs to check the running status of the A-GPS UEs in a cell, namely, needs to track all UEs that support the A-GPS function in the cell, because the brands or functions of the UEs used by the users in the cell are unknown, the tracking method in the prior art is unable to track such UEs.

EP 1443791A1 discloses a Location system and method for operating a mobile terminal as a responsible entity for selecting a positioning method, which includes: a controlling node receives capability information from a mobile terminal, indicating positioning methods supported by the mobile terminal and selectability of the positioning methods.

US 2007/037597 Al discloses a system for providing advanced voice services (AVS) in wireless communications systems, which includes an Element Management System (EMS) that maintains network and MS profiles, settings and parameters.

### SUMMARY OF THE INVENTION

The embodiments of the present invention provide a method and an NE for tracking based on UE capabilities so that a UE is tracked according to the capabilities supported by the UE.

According to the first aspect of the present invention a method for tracking based on UE capabilities includes:
receiving, by an NE, a capability support message from a UE, where the capability support message carries capabilities supported by the UE;
judging, by the NE, whether the capabilities supported by the UE fulfill a tracking condition according to the capabilities carried in the capability support message
initiating, by the NE, tracking of the UE if the capabilities fulfill the tracking condition; and
after the tracking of the UE is initiated, sending, by the NE, all or part of messages that are exchanged between the NE and the UE or specific contents in such messages to an Element Management System (EMS).

According to the second aspect of the present invention a network element (NE) for tracking based on UE capabilities includes:
a first receiving module, configured to receive a capability support message sent by a UE, where the capability support message carries capabilities supported by the UE; and
a tracking module, configured to track the UE if the capabilities carried in the capability support message received by the first receiving module fulfill a tracking condition and
means for sending all or part of messages that are exchanged between the NE and the UE or specific contents in such messages to an Element Management System (EMS) after the tracking of the UE is initiated.

Through the technical solution under the present invention, even if the capabilities supported by the UE are unknown, the UE with specific capabilities can be tracked according to the capabilities reported by the UE.

### BRIEF DESCRIPTION OF THE DRAWINGS

FIG. 1 is a flowchart of a first method embodiment of the present invention;
FIG. 2 is a flowchart of a second method embodiment of the present invention;
FIG. 3 is a flowchart of a third method embodiment of the present invention;
FIG. 4 shows a structure of a first NE embodiment of the present invention;
FIG. 5 shows a structure of a second NE embodiment of the present invention; and
FIG. 6 shows a structure of a system in an embodiment of the present invention.

### DETAILED DESCRIPTION OF THE EMBODIMENTS

The present invention is hereinafter described in detail with reference to accompanying drawings and preferred embodiments.

The embodiments of the present invention provide a solution to tracking based on UE capabilities so that the UE with specific capabilities can be tracked when the brand or model of the UE or the capabilities supported by the UE are unknown.

To make the technical solution under the present invention clearer, the following describes the embodiments of the present invention in more detail with reference to accompanying drawings.

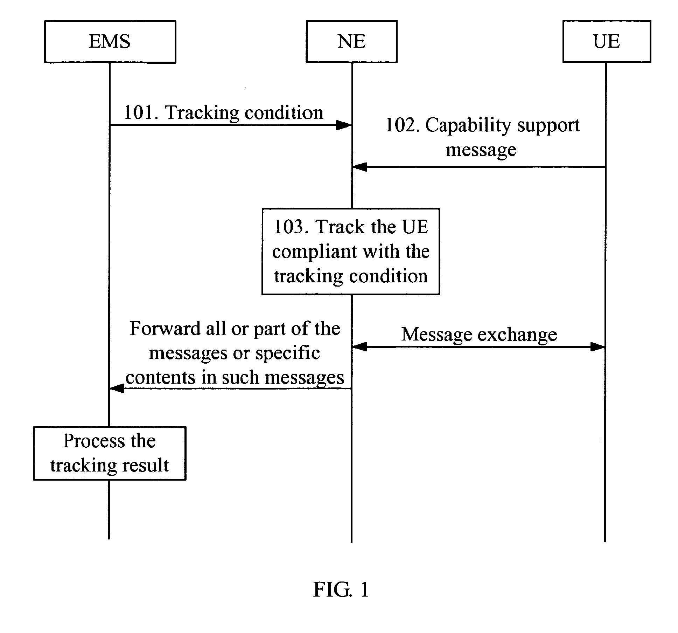

As shown in FIG. 1, the method for tracking based on UE capabilities in the first embodiment of the present invention includes the following steps:
Step 101: A tracking condition is set and notified to the NE. The tracking condition includes the information about the capability that needs to be supported by the UE to be tracked.

The tracking condition may be set on an Element Management System (EMS), and sent by the EMS to the NE; or set on the NE directly or set by an independent setting module.

The NE may be a Radio Network Controller (RNC) or a Mobile Switching Center (MSC) so long as the NE can receive the capability support message reported by the UE.

It should be noted that the foregoing step is optional. When the UE with a specific capability is tracked for one or more times, a tracking condition is set before the first tracking only, and does not need to be set before every attempt of tracking.

Step 102: The UE sends a capability support message to the NE. The capability support message carries the capabilities supported by the UE.

For example, in the 3GPP standards, the UE may send UE Capability Information that carries the capabilities supported by the UE to the NE.

Step 103: After receiving the capability support message, the NE judges whether the capabilities supported by the UE fulfill the tracking condition according to the capabilities carried in the capability support message, and initiates tracking of this UE if the capabilities fulfill the tracking condition.

The tracking condition may be received from the EMS previously, or set on the NE.

Step 103 may further include: initiating no tracking of this UE if the capabilities do not fulfill the tracking condition.

After the tracking is initiated, part or all of the signaling messages exchanged between the UE and the NE are forwarded by the NE to the EMS until the EMS suspends or stops the tracking. Alternatively, the contents forwarded by the NE to the EMS may also be specific contents in part or all of the signaling messages that are exchanged between the NE and the UE. The specific content to be forwarded may be set in the EMS or NE as required.

In the tracking process or after completion of the tracking, the tracking result may be processed through the EMS or another analysis system to obtain useful conclusions.

Through the technical solution provided in the first embodiment of the present invention, even if the capabilities of the UE are unknown, the UE can be tracked according to the capabilities reported by the UE.

To make the technical solution under the present invention clearer, the following describes the technical solution under the present invention through specific scenarios.

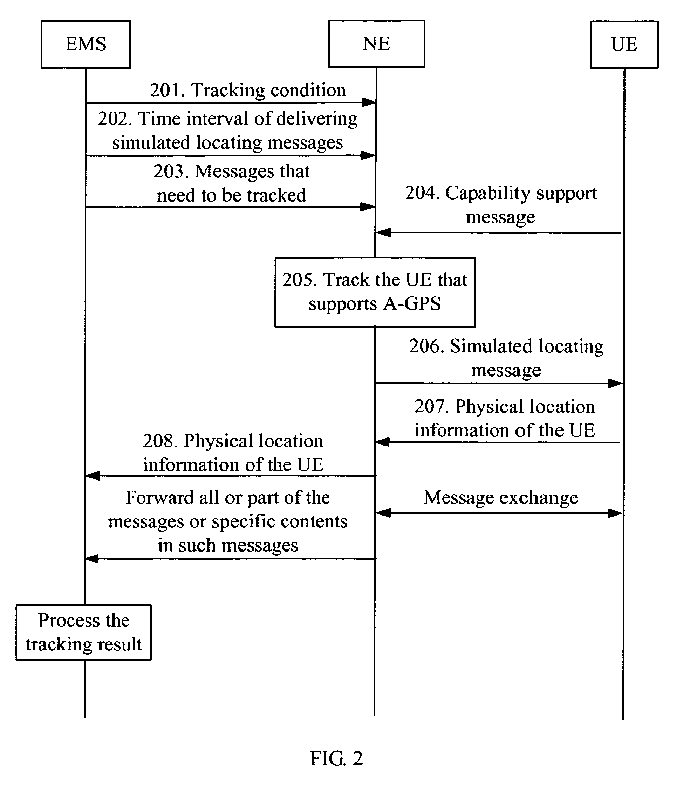

For example, on a network of an operator, different types of UEs are used by plenty of users. If the operator wants to track the usage of the UE that supports the A-GPS function it is only necessary to select "track the UE that supports A-GPS" in the tracking condition on the EMS or NE. In this way, all UEs that support A-GPS on the network can be tracked automatically. It is assumed that the tracking condition is set on the EMS. As shown in FIG. 2, the second embodiment of the present invention is an instance of tracking the UE that supports A-GPS. This embodiment includes the following steps:
Step 201: Set a tracking condition on the EMS, and notify the tracking condition to the NE. The tracking condition includes the capabilities that need to be supported by the UE to be tracked. Because the tracking target is the UE that supports A-GPS, the required UE capability in the tracking condition is the A-GPS function.

Besides, optional conditions such as the cell range to be tracked and the number of UEs to be tracked may be set on the EMS.

Step 202: Set a time interval for the NE to deliver simulated locating messages on the EMS, and notify the time interval to the NE.

For example, the time interval for the NE to deliver simulated locating messages is set to 200 ms. For the tracked UE, the NE delivers a simulated locating message to the UE every 200 ms to find the precise physical location information of the UE. After receiving the message, the UE reports the current precise physical location information to the NE.

It should be noted that step 202 is optional. The test personnel can deliver the simulated locating message manually anytime in the tracking process.

Step 203: Set the message to be tracked on the EMS, and notify the message to the NE.

For example, the wireless measurement report message is specified for tracking. The wireless measurement report message is a standard message of the 3GPP Iub interface, and carries the information such as wireless link quality.

If all messages of the UE need to be tracked, step 203 is optional.

Step 201, step 202, and step 203 above are not order-sensitive. When the UE that supports A-GPS is tracked for one or more times, the foregoing tracking condition is set before the first tracking only, and does not need to be set before every attempt of tracking. The contents set in step 201, step 202, and step 203 above may be carried in one message to the NE, or carried in different messages to the NE.

Step 204: The UE sends a capability support message to the NE. The capability support message carries the capabilities supported by the UE.

For example, in the 3GPP standards, the UE may send UE Capability Information that carries the capabilities supported by the UE to the NE.

Step 205: After receiving the capability support message, the NE judges whether the UE supports A-GPS according to the UE capabilities carried in the capability support message, and initiates tracking of this UE if the UE supports A-GPS.

After the tracking is initiated, the following steps may occur:
Step 206: The NE delivers a simulated locating message to the UE.

If the time interval for the NE to deliver simulated locating messages is set on the EMS in step 202, and is delivered to the NE, the NE delivers the simulated locating messages to the UE at such time intervals. For example, if the time interval set in step 202 is 200 ms, the NE delivers a simulated locating message to the UE every 200 ms.

If no time interval for the NE to deliver simulated locating messages is set in step 202, the test personnel can deliver the simulated locating messages manually.

Step 207: After receiving the simulated locating message, the UE returns its current physical location information to the NE.

Step 208: The NE sends the physical location information received from the UE to the EMS.

Besides, the UE reports signaling messages to the NE in the process of using services, for example, service information and wireless link quality information. The NE forwards the message compliant with the condition to the EMS according to the setting information previously delivered by the EMS.

After completion of tracking, the tracked information (such as the physical location of the UE, service information, and wireless link quality information) can be analyzed by the EMS or another tracking analysis system. The test personnel can draw the wireless quality distribution in all physical locations of the cell according to the tracked information, and judge whether the communication quality of the cell is normal and whether a coverage problem or an interference problem exists. For example, if the wireless link quality reported by the UE is poor in a specific physical location, a coverage problem may exist in this location.

Through the technical solution provided in the second embodiment, the UE can be tracked according to the capabilities reported by the UE. Through analysis on the tracked data, the problems in the network can be detected in time.

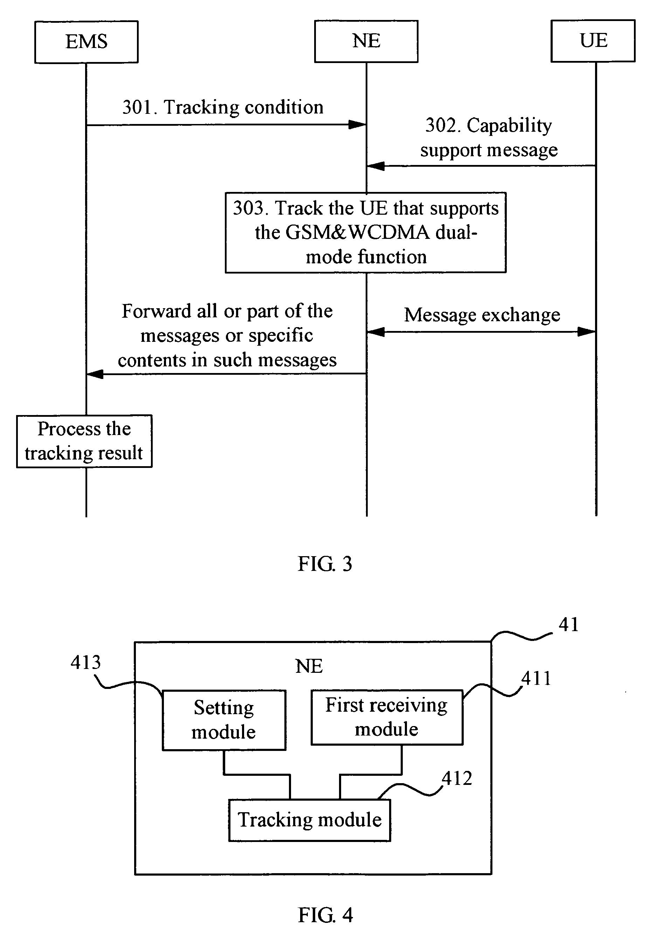

The method for tracking a UE that supports A-GPS is described above. The following describes the technical solution under the present invention through another scenario. Still supposing the tracking condition is set on the EMS, FIG. 3 shows how to track a dual-mode UE in an embodiment of the present invention. This tracking method in this embodiment includes the following steps:
Step 301: A tracking condition is set on the EMS and notified to the NE. The tracking condition includes the capability that needs to be supported by the UE to be tracked.

Because the tracking target is the UE that supports the Global System for Mobile communications & Wideband Code Division Multiple Access (GSM&WCDMA) dual-mode function, the required UE capability in the tracking condition is the GSM&WCDMA dual-mode function. Besides, the number of UEs, messages, or content of messages may be set on the EMS as tracking conditions.

Step 302: The UE sends a capability support message to the NE. The capability support message carries the capabilities supported by the UE.

Step 303: After receiving the capability support message, the NE judges whether the UE supports the GSM&WCDMA dual-mode function according to the UE capabilities carried in the capability support message, and initiates tracking of this UE if the UE supports the GSM&WCDMA dual-mode function.

If the condition set on the EMS further specifies the message that needs to be tracked, the NE forwards only the messages compliant with the condition to the EMS after receiving the messages from the UE.

The EMS or the fault location system analyzes such messages to obtain the call drop ratio, handover failure ratio, and so on. The EMS or the fault location system can also know the model of the UE through the IMEI of the UE, and further work out the call drop ratio and the handover failure ratio of each type of UE.

Through the technical solution provided in the third embodiment, the dual-mode UE can be tracked. Through analysis on the tracked data, the problems in the network can be detected in time so that the operator can handle the problems in time.

Corresponding to the method embodiment above, an NE for tracking based on UE capabilities is provided in an embodiment of the present invention. As shown in FIG. 4, the NE 41 includes:
a first receiving module 411, configured to receive a capability support message sent by a UE, where the capability support message carries capabilities supported by the UE; and
a tracking module 412, configured to track the UE if the capabilities carried in the capability support message received by the first receiving module 411 fulfill a tracking condition.

If the NE 41 needs to obtain the tracking condition from the EMS, besides the first receiving module 411 and the tracking module 412, the NE may further include:
a setting module 413, configured to set a tracking condition, which includes the information about the capability that needs to be supported by the UE to be tracked.

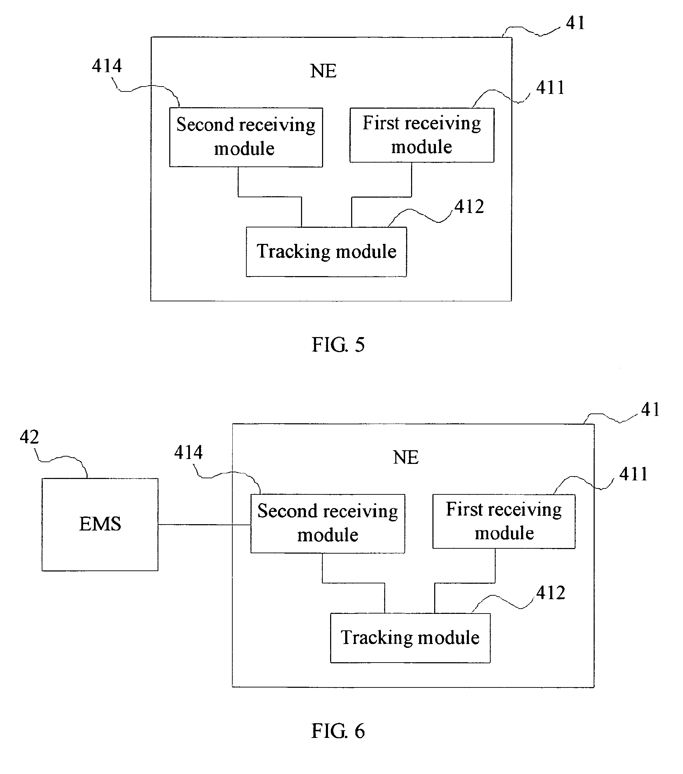

As shown in FIG. 5, if the NE 41 needs to obtain the tracking condition from the EMS, besides the first receiving module 411 and the tracking module 412, the NE 41 may further include:
a second receiving module 414, configured to obtain the tracking condition from the EMS, where the tracking condition includes the information about the capability that needs to be supported by the UE to be tracked.

The NE 41 may be an RNC or an MSC.

Through the NE 41 provided in the foregoing embodiment, the UE with a special capability can be tracked according to the capabilities reported by the UE.

A system for tracking based on UE capabilities is provided in an embodiment of the present invention. As shown in FIG. 6, the system includes the NE 41 described in the foregoing embodiment, and further includes:
an EMS 42, configured to set a tracking condition, which includes the information about the capability that needs to be supported by the UE to be tracked.

Through the system provided in this embodiment, the UE with a specific capability can be tracked according to the capabilities of the UE. The tracking condition may be set flexibly through the EMS so that the tracking is well targeted.

Persons of ordinary skill in the art understand that all or part of the steps of the method provided in any embodiment of the present invention may be implemented by a program instructing relevant hardware. When the program runs, the steps executed by the program include:
receiving a capability support message from the UE, where the capability support message carries capabilities supported by the UE; and
judging whether the capabilities supported by the UE fulfill a tracking condition according to the capabilities carried in the capability support message, and initiating tracking of the UE if the capabilities fulfill the tracking condition.

Besides, the tracking condition may be set through an upper-layer interface in the EMS or NE in the method described in the foregoing embodiment.

Through the technical solution provided in the foregoing embodiment, the UE can be tracked according to the capabilities reported by the UE. Through analysis on the tracked data, the problems in the network can be detected in time so that the operator can handle the problems in time.

The above descriptions are merely preferred embodiments of the present invention, but are not intended to limit the present invention.

## Claims

1. A method for tracking based on User Equipment (UE) capabilities, comprising:
receiving, by a Network Element (NE), a capability support message from a UE, wherein the capability support message carries capabilities supported by the UE;
judging, by the NE, whether the capabilities supported by the UE fulfill a tracking condition according to the capabilities carried in the capability support message;
initiating, by the NE, tracking of the UE if the capabilities fulfill the tracking condition; and
after the tracking of the UE is initiated, sending, by the NE, all or part of messages that are exchanged between the NE and the UE or specific contents in such messages to an Element Management System (EMS).

2. The method according to claim 1, further comprising:
receiving, by the NE, the tracking condition set by an Element Management System (EMS), wherein the tracking condition comprises information about a capability that needs to be supported by the UE to be tracked.

3. The method according to claim 1, further comprising:
setting the tracking condition on the NE.

4. The method according to claim 1, wherein after the tracking of the UE is initiated, the method further comprises:
sending, by the NE, a simulated locating message to the UE to make the UE return its current physical location information to the NE, and
receiving, by the NE, physical location information reported by the UE.

5. The method according to claim 4, wherein after the NE receives the physical location information reported by the UE, the method further comprises:
sending, by the NE, the physical location information reported by the UE to an Element Management System (EMS).

6. A Network Element (NE) for tracking based on User Equipment (UE) capabilities, comprising:
a first receiving module (411), configured to receive a capability support message sent by a UE, wherein the capability support message carries capabilities supported by the UE;
a tracking module (412), configured to track the UE if the capabilities carried in the capability support message received by the first receiving module fulfill a tracking condition; and
means for sending all or part of messages that are exchanged between the NE and the UE or specific contents in such messages to an Element Management System (EMS) after the tracking of the UE is initiated.

7. The NE according to claim 6, further comprising:
a second receiving module (414), configured to obtain the tracking condition from an Element Management System (EMS), wherein the tracking condition comprises information about a capability that needs to be supported by the UE to be tracked.

8. The NE according to claim 6, further comprising:
a setting module (413), configured to set the tracking condition which comprises information about a capability that needs to be supported by the UE to be tracked.

9. The NE according to any of claims 6-8, wherein:
the NE is a Radio Network Controller (RNC) or a Mobile Switching Center (MSC).

## Patentansprüche

1. Verfahren zum Tracking auf der Basis von Fähigkeiten von Benutzergeräten UE, umfassend:
Empfangen einer Fähigkeitsunterstützungsnachricht durch ein Netzwerkelement NE von einem UE, wobei die Fähigkeitsunterstützungsnachricht durch das UE unterstützte Fähigkeiten führt;
Beurteilen durch das NE, ob die durch das UE unterstützten Fähigkeiten eine Tracking-Bedingung erfüllen, gemäß den in der Fähigkeitsunterstützungsnachricht geführten Fähigkeiten;
Einleiten des Tracking des UE durch das NE, wenn die Fähigkeiten die Tracking-Bedingung erfüllen; und
nachdem das Tracking des UE eingeleitet ist, Senden von Nachrichten, die zwischen dem NE und dem UE ausgetauscht werden, oder von spezifischen Inhalten in solchen Nachrichten durch das NE ganz oder teilweise zu einem Element Management System EMS.

2. Verfahren nach Anspruch 1, ferner umfassend:
Empfangen der durch ein Element Management System EMS gesetzten Tracking-Bedingung durch das NE, wobei die Tracking-Bedingung Informationen über eine Fähigkeit umfasst, die durch das UE unterstützt werden muss, um getrackt zu werden.

3. Verfahren nach Anspruch 1, ferner umfassend:
Setzen der Tracking-Bedingung auf dem NE.

4. Verfahren nach Anspruch 1, wobei, nachdem das Tracking des UE eingeleitet ist, das Verfahren ferner Folgendes umfasst:
Senden einer simulierten Lokalisierungsnachricht durch das NE zu dem UE, um zu veranlassen, dass das UE seine Informationen über den aktuellen physischen Ort zu dem NE zurückgibt, und
Empfangen von durch das UE gemeldeten Informationen des physischen Orts durch das NE.

5. Verfahren nach Anspruch 4, wobei das Verfahren, nachdem das NE die durch das UE gemeldeten Informationen des physischen Orts empfängt, ferner Folgendes umfasst:
Senden der durch das UE gemeldeten Informationen des physischen Orts durch das NE zu einem Element Management System EMS.

6. Netzwerkelement NE zum Tracking auf der Basis von Fähigkeiten von Benutzergeräten UE, umfassend:
ein erstes Empfangsmodul (411), das dafür ausgelegt ist, eine durch ein UE gesendete Fähigkeitsunterstützungsnachricht zu empfangen, wobei die Fähigkeitsunterstützungsnachricht durch das UE unterstützte Fähigkeiten führt;
ein Tracking-Modul (412), das dafür ausgelegt ist, das UE zu tracken, wenn die in der durch das erste Empfangsmodul empfangenen Fähigkeitsunterstützungsnachricht geführten Fähigkeiten eine Tracking-Bedingung erfüllen; und
Mittel zum Senden von Nachrichten, die zwischen dem NE und dem UE ausgetauscht werden, oder von spezifischen Inhalten in solchen Nachrichten ganz oder teilweise zu einem Element Management System EMS, nachdem das Tracking des UE eingeleitet ist.

7. NE nach Anspruch 6, ferner umfassend:
ein zweites Empfangsmodul (414), das dafür ausgelegt ist, die Tracking-Bedingung von einem Element Management System EMS zu erhalten, wobei die Tracking-Bedingung Informationen über eine Fähigkeit umfasst, die durch das UE unterstützt werden muss, um getrackt zu werden.

8. NE nach Anspruch 6, ferner umfassend:
ein Setzmodul (413), das dafür ausgelegt ist, die Tracking-Bedingung zu setzen, die Informationen über eine Fähigkeit umfasst, die durch das UE unterstützt werden muss, um getrackt zu werden.

9. NE nach einem der Ansprüche 6-8, wobei
das NE eine Funknetzsteuerung RNC oder eine Mobilvermittlungsstelle MSC ist.

## Revendications

1. Procédé de suivi basé sur des capabilités d'Equipement Utilisateur (UE), comprenant
la réception, par un Elément de Réseau (NE), d'un message de support de capabilités depuis un UE, le message de support de capabilités comportant les capabilités supportées par l'DE;
le jugement, par le NE, que les capabilités supportées par l'UE remplissent ou non une condition de suivi en fonction des capabilités incluses dans le message de support de capabilités ;
le lancement, par le NE, d'un suivi de l'UE si les capabilités satisfont la condition de suivi ; et
après le lancement du suivi de l'UE, l'envoi, par le NE, de la totalité ou d'une partie des messages qui sont échangés entre le NE et l'UE ou de contenus spécifiques dans de tels messages à un Système de Gestion d'Eléments (EMS).

2. Procédé selon la revendication 1, comprenant en outre :
la réception, par le NE, de la condition de suivi établie par un Système de Gestion d'Eléments (EMS), la condition de suivi comprenant des informations relatives à une capabilité qui doit être supportée par l'UE à suivre.

3. Procédé selon la revendication 1, comprenant en outre :
l'établissement de la condition de suivi sur le NE.

4. Procédé selon la revendication 1, comprenant en outre après le lancement du suivi de l'UE:
l'envoi, par le NE, d'un message de positionnement simulé à l'UE afin de faire en sorte que l'UE renvoie son information de position physique courante au NE, et la réception, par le NE, de l'information de position physique signalée par l'UE.

5. Procédé selon la revendication 4, comprenant en outre, après la réception par le NE de l'information de position physique signalée par l'UE:
l'envoi, par le NE, de l'information de position physique signalée par l'UE, à un Système de Gestion d'Eléments (EMS).

6. Elément de Réseau (NE) destiné à effectuer un suivi basé sur des capabilités d'Equipement Utilisateur (UE), comprenant :
un premier module de réception (411), configuré pour recevoir un message de support de capabilités envoyé par un UE, le message de support de capabilités comportant les capabilités supportées par l'UE ;
un module de suivi (412), configuré pour suivre l'UE si les capabilités incluses dans le message de support de capabilités reçu par le premier module de réception satisfont une condition de suivi ; et
un moyen pour envoyer la totalité ou une partie des messages qui sont échangés entre le NE et l'UE ou des contenus spécifiques dans de tels messages à un Système de Gestion d'Eléments (EMS) après le lancement du suivi de l'UE.

7. NE selon la revendication 6, comprenant en outre :
un second module de réception (414), configuré pour obtenir la condition de suivi depuis un Système de Gestion d'Eléments (EMS), la condition de suivi comprenant des informations relatives à une capabilité qui doit être supportée par l'UE à suivre.

8. NE selon la revendication 6, comprenant en outre :
un module d'établissement (413), configuré pour établir la condition de suivi qui comprend des informations relatives à une capabilité qui doit être supportée par l'UE à suivre.

9. NE selon l'une quelconque des revendications 6 à 8, dans lequel :
le NE est un Contrôleur de Réseau Radio (RNC) ou un Centre de Commutation de Services Mobiles (MSC).
